(19)

Europäisches
Patentamt
European
Patent Office
Office européen
des brevets

(11) **EP 4 286 164 A1**

(12) **EUROPEAN PATENT APPLICATION**
published in accordance with Art. 153(4) EPC

(43) Date of publication:
**06.12.2023 Bulletin 2023/49**

(21) Application number: **22745720.7**

(22) Date of filing: **20.01.2022**

(51) International Patent Classification (IPC):
**B41J 2/01** (2006.01)    **C09D 11/101** (2014.01)
**C09D 11/322** (2014.01)    **B41M 5/00** (2006.01)

(52) Cooperative Patent Classification (CPC):
**B41J 2/01; B41M 5/00; C09D 11/101; C09D 11/322**

(86) International application number:
**PCT/JP2022/002038**

(87) International publication number:
**WO 2022/163499 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021   JP 2021013651**

(71) Applicant: **Kyodo Printing Co., Ltd.
Tokyo 112-8501 (JP)**

(72) Inventors:
• **KOBAYASHI, Fumihito
Tokyo 112-8501 (JP)**
• **KARINO, Masahiro
Tokyo 112-8501 (JP)**
• **TERADA, Akira
Tokyo 112-8501 (JP)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

(54) **INFRARED-ABSORBING ULTRAVIOLET-CURABLE INK, AND INFRARED-ABSORBING PRINTED MATTER**

(57)    Provided is an ink composition that is obtained by using an ultraviolet-curable urethane acrylate resin together with a tungsten-based infrared-absorbing pigment and an ultraviolet-absorbing fluorescent pigment. Specifically, this infrared-absorbing ultraviolet-curable ink contains: a tungsten-based infrared-absorbing pigment; a UV-absorbing fluorescent pigment; a UV-curable urethane acrylate resin; and a UV-curable acrylic resin that does not contain a urethane bond.

EP 4 286 164 A1

**Description**

FIELD

The present invention relates to an infrared-absorbing ultraviolet-curable ink and an infrared-absorbing printed object. More specifically, the present invention relates to an infrared-absorbing ultraviolet-curable ink containing a tungsten-based infrared-absorbing pigment and an ultraviolet-absorbing fluorescent pigment, and an infrared-absorbing printed object.

BACKGROUND

Infrared-absorbing inks, a type of functional ink, are used in various applications. For example, invisible printing is implemented in parts of securities to provide anti-counterfeiting measures.

Examples of pigments exhibiting an infrared-absorbing function that are mixed in infrared-absorbing inks include cesium tungsten oxide (CWO), antimony-doped tin oxide (ATO), indium tin oxide (ITO), and carbon black. Of these, from the viewpoints of high infrared-absorbing function and high transparency, the demand for infrared-absorbing inks using cesium tungsten oxide (CWO) has been increasing.

For example, PTL 1 discloses an ink comprising fine particles of an infrared-absorbing material selected from composite tungsten oxides such as cesium tungsten oxide (CWO) and tungsten oxides having a Magnéli phase and a vehicle.

PTL 2 proposes an anti-counterfeiting ink composition in which ultrafine particles of a composite tungsten oxide (such as CWO) having an XRD peak top intensity ratio in a specific range are used, and describes that a fluorescent material may be added to the composition.

However, the tungsten-based infrared-absorbing pigments used in the infrared-absorbing inks disclosed in PTL 1 and 2 may be deactivated due to effects of basic substances such as detergents and may not be able to maintain an infrared-absorbing function.

In response thereto, PTL 3 proposes that a tungsten-based infrared-absorbing pigment, a fixed amount of a solvent, an acrylic resin soluble in the solvent, and an ultraviolet-curable resin are mixed together to prepare an ink, thereby imparting resistance (wash resistance) against basic substances such as detergents to the tungsten-based infrared-absorbing pigment (refer to PTL 3).

[CITATION LIST]

[PATENT LITERATURE]

   [PTL 1] WO 2016/121801
   [PTL 2] WO 2017/104855
   [PTL 3] Japanese Unexamined Patent Publication (Kokai) No. 2020-050690

SUMMARY

[TECHNICAL PROBLEM]

Although the ink disclosed in PTL 3 has wash resistance to some extent, an even higher wash resistance may be required, depending on the application.

Printed objects printed using an infrared-absorbing material such as cesium tungsten oxide (CWO) require dedicated equipment such as an infrared camera for authentication. Thus, while confidentiality is high, equipment introduction costs are enormous, and the costs become higher when authentication is carried out at multiple locations.

The present inventors have envisioned that in authentication, a primary anti-counterfeiting evaluation using an ultraviolet (UV)-emitting device, which is generally inexpensive equipment, be carried out, prior to carrying out an infrared absorption evaluation.

Specifically, an ink composition comprising a fluorescent pigment that absorbs ultraviolet (UV) rays and emits light, in addition to a pigment exhibiting an infrared-absorbing function, is used. A printed object printed using this composition is produced and used as an authentic printed object.

Printed objects subject to authentication are evaluated using an ultraviolet (UV)-emitting device as a primary evaluation. An infrared absorption evaluation is carried out as a secondary evaluation using dedicated equipment such as an infrared camera only for products evaluated as possible counterfeits.

The two-stage evaluation as described above can also be applied to printed objects in which higher-security determination is required.

However, in such an ink composition, i.e., an ink composition containing a fluorescent pigment having an ultraviolet (UV)-absorbing ability in addition to a tungsten-based infrared-absorbing pigment, the wash resistance of the fluorescent pigment tends to degrade significantly due to interaction between the pigments.

In view of the above background, an object of the present invention is to provide an infrared-absorbing ultraviolet-curable ink having both an infrared absorption property and an ultraviolet absorption property and capable of providing printed objects with excellent base resistance, particularly wash resistance, and an infrared-absorbing printed object.

[SOLUTION TO PROBLEM]

The present inventors have undergone intensive studies to achieve the above object. The present inventors have discovered that by using an ink composition in which an ultraviolet-curable urethane acrylate resin is used together with a tungsten-based ultraviolet-absorbing pigment and an ultraviolet-absorbing fluorescent pigment, a printed object having both an infrared absorption property and an ultraviolet absorption property and having excellent base resistance due to ultraviolet curing can be obtained, and completed the present invention. Specifically, the present invention is as follows.

Aspect 1

An infrared-absorbing ultraviolet-curable ink, comprising a tungsten-based infrared-absorbing pigment, an ultraviolet-absorbing fluorescent pigment, an ultraviolet-curable urethane acrylate resin, and an ultraviolet-curable acrylic resin comprising no urethane bond.

Aspect 2

The infrared-absorbing ultraviolet-curable ink according to Aspect 1, comprising 1 to 150 parts by mass of the ultraviolet-curable urethane acrylate resin relative to 100 parts by mass of the ultraviolet-curable acrylic resin.

Aspect 3

The infrared-absorbing ultraviolet-curable ink according to Aspect 1 or 2, comprising 20 parts by mass or less of the tungsten-based infrared-absorbing pigment relative to 100 parts by mass in total solids of the infrared-absorbing ultraviolet-curable ink.

Aspect 4

The infrared-absorbing ultraviolet-curable ink according to any one of Aspects 1 to 3, comprising 20 parts by mass or less of the ultraviolet-absorbing fluorescent pigment relative to 100 parts by mass in total solids of the infrared-absorbing ultraviolet-curable ink.

Aspect 5

The infrared-absorbing ultraviolet-curable ink according to any one of Aspects 1 to 4, comprising 1 to 50 parts by mass of the ultraviolet-curable urethane acrylate resin relative to 100 parts by mass in total solids of the infrared-absorbing ultraviolet-curable ink.

Aspect 6

The infrared-absorbing ultraviolet-curable ink according to any one of Aspects 1 to 5, wherein the ultraviolet-curable urethane acrylate resin comprises a plurality of acryloyl groups.

Aspect 7

The infrared-absorbing ultraviolet-curable ink according to any one of Aspects 1 to 6, wherein the tungsten-based infrared-absorbing pigment is at least one selected from

composite tungsten oxides represented by general formula (1): $M_xW_yO_z$, wherein

M is one or more elements selected from the group consisting of H, He, alkali metals, alkaline earth metals, rare earth metals, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; $0 < x/y \leq 1$; and $2.2 \leq z/y \leq 3.0$, and

tungsten oxides having a Magnéli phase represented by general formula (2): $W_yO_z$, wherein

W is tungsten; O is oxygen; y and z are each a positive number; and $2.45 \leq z/y \leq 2.999$.

Aspect 8

The infrared-absorbing ultraviolet-curable ink according to any one of Aspects 1 to 7, which is an inkjet ink.

Aspect 9

An infrared-absorbing printed object, comprising a printed portion printed with the infrared-absorbing ultraviolet-curable ink according to any one of Aspects 1 to 8.

[ADVANTAGEOUS EFFECTS OF INVENTION]

The infrared-absorbing ultraviolet-curable ink of the present invention is an ink having both an infrared absorption property and an ultraviolet absorption property and being capable of providing a printed object having excellent base resistance, particularly wash resistance. Therefore, a printed object obtained using the infrared-absorbing ultraviolet-curable ink of the present invention can maintain an infrared-absorbing function and an ultraviolet-absorbing function due to the base resistance, even when washed with garments.

An authentic printed object formed using the infrared-absorbing ultraviolet-curable ink of the present invention has both an infrared absorption property and an ultraviolet absorption property. When authenticating a printed object of unknown authenticity, a primary evaluation can be carried out using an ultraviolet (UV)-emitting device, which is generally inexpensive equipment, and infrared absorption evaluation using dedicated equipment such as an infrared camera can be carried out as a secondary evaluation only when there is a likelihood of a counterfeit or when security is required.

Specifically, if a printed object formed using the infrared-absorbing ultraviolet-curable ink of the present invention is regarded as an authentic printed object, the authentication of a printed object of unknown authenticity is a two-stage evaluation consisting of a primary evaluation and a secondary evaluation, and a simple ultraviolet (UV) absorption evaluation as the primary evaluation can limit the objects subjected to the secondary evaluation. Thus, according to the present invention, the convenience of authentication can be improved and the introduction cost of expensive infrared evaluation devices can be suppressed, whereby the utilization scene of authentication can be expanded.

DESCRIPTION OF EMBODIMENTS

Infrared-absorbing ultraviolet-curable ink

The infrared-absorbing ultraviolet-curable ink of the present invention comprises a tungsten-based infrared-absorbing pigment, an ultraviolet-absorbing fluorescent pigment, an ultraviolet-curable urethane acrylate resin, and an ultraviolet-curable acrylic resin comprising no urethane bond.

In the present invention, "ultraviolet-curable resin" means a material cured by polymerization or cross-linking, by the energy of ultraviolet rays emitted from an ultraviolet-emitting device and a photopolymerization initiator, and may be in the form of a monomer, an oligomer, or a prepolymer.

By containing a tungsten-based infrared-absorbing pigment in the infrared-absorbing ultraviolet-curable ink of the present invention, a printed object having an infrared-absorbing ability can be provided. In addition, by containing an ultraviolet-absorbing fluorescent pigment, a printed object having an ultraviolet-absorbing ability can be provided. Further, by containing an ultraviolet-curable urethane acrylate resin, a printed object having an ultraviolet-curing ability and excellent base resistance, particularly wash resistance, can be realized.

A tungsten-based infrared-absorbing pigment, which imparts an infrared-absorbing ability, tends to precipitate in a conventional ink mainly composed of an ultraviolet-curable acrylic resin comprising no urethane bond even when dispersed in the ink, or a pigment-containing dispersion tends to separate from the ultraviolet-curable ink, making use as a printing ink difficult.

When an ultraviolet-absorbing fluorescent pigment, which imparts an ultraviolet-absorbing ability, is contained in a conventional ink mainly composed of an ultraviolet-curable acrylic resin comprising no urethane bond, a printed object having excellent base resistance, particularly wash resistance, can be realized by the ultraviolet-absorbing fluorescent pigment alone. However, when dispersed in an ink with a tungsten-based infrared-absorbing pigment, the wash resistance is greatly impaired.

An ultraviolet-curable urethane acrylate resin, which imparts wash resistance and is an indispensable component of the present invention, has a high viscosity. Thus, a composition comprising an ultraviolet-curable urethane acrylate resin as a component cannot be used as-is as an inkjet ink.

In response thereto, the present inventors have discovered that by using an ultraviolet-curable acrylic resin having a low viscosity and a high compatibility with an ultraviolet-curable urethane acrylate resin, a tungsten-based infrared-absorbing pigment can be satisfactory dispersed, the functions of an ultraviolet-absorbing fluorescent pigment can be maintained even in the presence of the tungsten-based infrared-absorbing pigment, an increase in ink viscosity caused by the ultraviolet-curable urethane acrylate resin can be suppressed, and as a result, a practical ink can be realized.

Without being bound by theory, the effect as described above is exhibited presumably because of the following mechanism.

The ink of the present invention contains an ultraviolet-curable urethane acrylate resin, whereby formation of hydrogen bonds from urethane bonds is possible. Therefore, a tungsten-based infrared-absorbing pigment and an ultraviolet-absorbing fluorescent pigment are coated with the ultraviolet-curable urethane acrylate resin by forming hydrogen bonds therewith. By coating these pigments with a resin, dispersibility in ink is improved, and base resistance, particularly wash resistance, of a printed object is improved. In addition, the resin coating reduces interaction between the tungsten-based infrared-absorbing pigment and the ultraviolet-absorbing fluorescent pigment, thereby maintaining the function of the ultraviolet-absorbing fluorescent pigment. Further, since the ink of the present invention contains an ultraviolet-curable acrylic resin having high compatibility with the ultraviolet-curable urethane acrylate resin, formation of hydrogen bonds within the ultraviolet-curable urethane acrylate resin is not inhibited, and presumably an increase in viscosity of the ink is suppressed.

The viscosity of the infrared-absorbing ultraviolet-curable ink of the present invention at a temperature of about 25 °C may be 300 mPa s or less, 150 mPa s or less, 80 mPa s or less, or 60 mPa s or less, and may be 10 mPa s or more or 15 mPa s or more.

When the infrared-absorbing ultraviolet-curable ink of the present invention is used as an inkjet ink, the viscosity of the ink is preferably 60 mPa s or less, may be 40 mPa s or less or 30 mPa s or less, and is particularly preferably 20 mPa s or less.

Tungsten-based infrared-absorbing pigment

A tungsten-based infrared-absorbing pigment as an indispensable component is dispersed in the infrared-absorbing ultraviolet-curable ink of the present invention. By containing a tungsten-based infrared-absorbing pigment in the infrared-absorbing ultraviolet-curable ink of the present invention, a printed object having an infrared-absorbing ability can be provided.

The tungsten-based infrared-absorbing pigment used in the present invention is not particularly limited. Any known pigment used in the field of inks can be applied.

The tungsten-based infrared-absorbing pigment may be, for example, one or more infrared-absorbing pigments selected from composite tungsten oxides represented by general formula (1): $M_xW_yO_z$, wherein M is one or more elements selected from the group of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; $0 < x/y \leq 1$; and $2.2 \leq z/y \leq 3.0$, or tungsten oxides having a Magnéli phase represented by general formula (2): $W_yO_z$, wherein W is tungsten; O is oxygen; y and z are each a positive number; and $2.45 \leq z/y \leq 2.999$.

Such a tungsten-based infrared-absorbing pigment can be produced by a production method of a composite tungsten oxide or a tungsten oxide having a Magnéli phase disclosed in, for example, Japanese Unexamined Patent Publication (Kokai) No. 2005-187323.

Element M is added to the composite tungsten oxide represented by the general formula (1). Thus, in the general formula (1) even when z/y = 3.0, free electrons are generated, absorption characteristics from the free electrons are exhibited in the near-infrared light wavelength region, and the composite tungsten oxide is effective as a material that absorbs near-infrared rays near the wavelength of 1000 nm.

In particular, from the viewpoint of improving optical characteristics and weatherability as a near-infrared-absorbing material, the element M can be one or more selected from the group consisting of Cs, Rb, K, Tl, In, Ba, Li, Ca, Sr, Fe, and Sn.

The composite tungsten oxide represented by the general formula (1) may be treated with a silane coupling agent. By treating the composite tungsten oxide represented by the general formula (1) with a silane coupling agent, near-infrared absorption and transparency in the visible light wavelength region can be enhanced.

When the value of x/y indicating the addition amount of the element M is greater than 0, sufficient free electrons are generated and a near-infrared absorption effect can be sufficiently demonstrated. The larger the addition amount of the element M, the greater the number of free electrons supplied, and in turn the greater the near-infrared absorption effect. However, the number of free electrons supplied normally saturates at the value of x/y of about 1. When the value of x/y is 1 or less, it is possible to prevent the formation of an impurity phase in a pigment-containing layer.

The value of x/y may be 0.001 or greater, 0.2 or greater, or 0.30 or greater, and may be 0.85 or less, 0.5 or less, or 0.35 or less. In particular, the value of x/y can be about 0.33.

The value of z/y in the general formulas (1) and (2) indicates the level of oxygen amount control. For the composite tungsten oxide represented by the general formula (1), when the value of z/y satisfies the relation $2.2 \leq z/y < 3.0$, the same oxygen control mechanism operates as the tungsten oxide represented by the general formula (2). In addition thereto, in the composite tungsten oxide represented by the general formula (1), even when z/y = 3.0, free electrons are supplied due to the addition of the element M. In the general formula (1), the value of z/y may satisfy the relation $2.45 \leq z/y \leq 3.0$.

The composite tungsten oxide represented by the general formula (1) preferably comprises a hexagonal crystal structure or consists of a hexagonal crystal structure. When the composite tungsten oxide represented by the general formula (1) has a hexagonal crystal structure, transmission in the visible light wavelength region of the pigment is increased, and absorption in the near-infrared light wavelength region is increased. Cations of the element M are arranged in the voids of the hexagonal crystal.

Generally, when an element M having a large ionic radius is added, hexagonal crystals are formed. Specifically, hexagonal crystals are easily formed when an element having a large ionic radius such as Cs, K, Rb, Tl, In, Ba, Sn, Li, Ca, Sr, or Fe is added. However, the element M in the composite tungsten oxide represented by the general formula (1) is not limited to these elements as long as the added element M is present in the hexagonal voids formed by $WO_6$ units.

When the composite tungsten oxide having a hexagonal crystal structure and represented by the general formula (1) has a uniform crystal structure, the addition amount of the added element M can be set to 0.2 or greater and 0.5 or less or can be 0.30 or greater and 0.35 or less in terms of the value of x/y, and can be particularly set to about 0.33. When the value of x/y is about 0.33, it is considered that the added element M is arranged substantially in all of the hexagonal voids.

Other than hexagonal, the crystal structure may be tetragonal or cubic tungsten bronze. Depending on the crystal structure, the absorption sites for the near-infrared light wavelength region of the composite tungsten oxide represented by the general formula (1) tend to change, and the absorption sites tend to migrate to the long wavelength side in the order of cubic, tetragonal, and hexagonal. This is accompanied by low absorption in the visible light wavelength region in the order of hexagonal, tetragonal, and cubic. When more light transmitted in the visible light wavelength region and more light absorbed in the near-infrared light wavelength region are desired, a hexagonal tungsten bronze may be used.

In the tungsten oxide having a Magnéli phase represented by the general formula (2), a pigment in which the so-called "Magnéli phase", wherein the value of z/y satisfies the relation $2.45 \leq z/y \leq 2.999$, imparts high stability and high absorption characteristics in the near-infrared light wavelength region is obtained.

For the composite tungsten oxide represented by the general formula (1) and the tungsten oxide having a Magnéli phase represented by the general formula (2), the transparent color tone is often bluish to greenish due to significant absorption of light in the near-infrared light wavelength region, particularly near the wavelength of 1000 nm.

The dispersed particle size of the tungsten-based infrared-absorbing pigment used in the infrared-absorbing ultraviolet-curable ink of the present invention is not particularly limited and can be appropriately selected according to the intended use of the ink to be formed.

When formation of a transparent ink is desired, a tungsten-based infrared-absorbing pigment having a dispersed particle size of 2000 nm or less by volume average is preferably used. When the dispersed particle size is 2000 nm or less, the difference between the peak of transmittance (reflectance) in the visible light wavelength region and the bottom of absorption in the near-infrared light wavelength region becomes large, and thus a near-infrared-absorbing pigment having transparency in the visible light wavelength region is obtained. Moreover, for particles having a dispersed particle size of less than 2000 nm, light is not completely blocked by scattering, and thus visibility in the visible light wavelength region can be maintained while transparency can be efficiently maintained.

When transparency in the visible light wavelength region is emphasized, scattering by the particles is preferably taken into account. Specifically, the dispersed particle size by volume average of the tungsten-based infrared-absorbing pigment is preferably 200 nm or less, and may be 100 nm or less, 50 nm or less, or 30 nm or less.

When the dispersed particle size of the tungsten-based infrared-absorbing pigment is 200 nm or less, geometric scattering or Mie scattering is reduced, and the dispersed particle size enters the Rayleigh scattering region. In the Rayleigh scattering region, the amount of scattered light decreases in inverse proportion to the sixth power of the dispersed particle size. Thus, as the dispersed particle size decreases, scattering is reduced and transparency is improved. When the dispersed particle size of the tungsten-based infrared-absorbing pigment is 100 nm or less, the amount of scattered light decreases significantly. Thus, from the viewpoint of avoiding light scattering, the dispersed particle size is preferably small.

When the dispersed particle size of the tungsten-based infrared-absorbing pigment is 1 nm or more, 3 nm or more, 5 nm or more, or 10 nm or more, industrial production tends to be easier.

The dispersed particle size by volume average of the tungsten-based infrared-absorbing pigment can be measured using a Microtrac particle size analyzer (manufactured by Nikkiso Co., Ltd.) by a dynamic light scattering method, in which microparticles in Brownian motion are irradiated with laser light to obtain light scattering information, and a particle size is determined therefrom.

The content of the tungsten-based infrared-absorbing pigment in the infrared-absorbing ultraviolet-curable ink of the present invention is not particularly limited, and preferably 20 parts by mass or less of the tungsten-based infrared-absorbing pigment is contained relative to 100 parts by mass in total solids content of the infrared-absorbing ultraviolet-curable ink. When the content of the tungsten-based infrared-absorbing pigment in the infrared-absorbing ultraviolet-curable ink is set to this range, dispersibility of the pigment is improved, an excessive increase in ink viscosity is suppressed, and production cost of the ink is further suppressed.

The content of the tungsten-based infrared-absorbing pigment in the infrared-absorbing ultraviolet-curable ink of the present invention relative to 100 parts by mass in total solids content of the infrared-absorbing ultraviolet-curable ink may be 20 parts by mass or less, 15 parts by mass or less, 14 parts by mass or less, 12 parts by mass or less, 10 parts by mass or less, 8 parts by mass or less, 5 parts by mass or less, or 3 parts by mass or less.

The content of the tungsten-based infrared-absorbing pigment in the infrared-absorbing ultraviolet-curable ink of the present invention relative to 100 parts by mass in total solids content of the infrared-absorbing ultraviolet-curable ink may be 0.1 parts by mass or more, 0.5 parts by mass or more, 1.0 parts by mass or more, 1.5 parts by mass or more, 2.0 parts by mass or more, 3.0 parts by mass or more, or 5.0 parts by mass or more.

<Ultraviolet-absorbing fluorescent pigment>

An ultraviolet-absorbing fluorescent pigment as an indispensable component is dispersed in the infrared-absorbing ultraviolet-curable ink of the present invention. By containing an ultraviolet-absorbing fluorescent pigment in the infrared-absorbing ultraviolet-curable ink of the present invention, a printed object having an ultraviolet-absorbing ability can be provided.

The ultraviolet-absorbing fluorescent pigment used in the present invention fluoresces and emits visible light having spectral peaks in blue, green, and red when excited by ultraviolet light and then returning to a low energy state. In the present invention, the ultraviolet-absorbing fluorescent pigment is not particularly limited as long as the substance fluoresces by absorbing ultraviolet rays. Any known pigment used in the field of inks can be applied.

The ultraviolet-absorbing fluorescent pigment may be an organic pigment or an inorganic pigment. From the viewpoint of excellent weatherability, an inorganic pigment is preferably used. On the other hand, when it is desirable to ensure transparency and enhance invisibility, adding a small amount of an organic pigment that sufficiently fluoresces is preferable.

Examples of the organic ultraviolet-absorbing fluorescent pigment include Lumogen L Yellow, Lumogen Brilliant Yellow, and Lumogen Brilliant Green. Examples of the inorganic fluorescent pigment can include compounds represented by $M-Al_2O_4$ (M is a fluorescent pigment obtained by using a compound composed of strontium (Sr) and barium (Ba) as a seed crystal, adding europium (Eu) as an activator, and adding dysprosium (Dy) as a coactivator).

Commercially available products can also be used. Examples of such an organic ultraviolet-absorbing fluorescent pigment include Lumikol™ 1000 (Nippon Keiko Kagaku Co., Ltd., quinazolone derivative). Examples of such an inorganic ultraviolet-absorbing fluorescent pigment include D1164 manufactured by Nemoto & Co., Ltd.

The content of the ultraviolet-absorbing fluorescent pigment in the infrared-absorbing ultraviolet-curable ink of the present invention is not particularly limited, and can be appropriately set depending on whether an organic pigment or an inorganic pigment is used.

The content of the ultraviolet-absorbing fluorescent pigment in the infrared-absorbing ultraviolet-curable ink of the present invention relative to 100 parts by mass in total solids content of the infrared-absorbing ultraviolet-curable ink may be 20 parts by mass or less, 15 parts by mass or less, 14 parts by mass or less, 12 parts by mass or less, 10 parts by mass or less, 8 parts by mass or less, 5 parts by mass or less, or 3 parts by mass or less. When the content of the ultraviolet-absorbing fluorescent pigment in the infrared-absorbing ultraviolet-curable ink is set to this range, dispersibility of the pigment is improved, an excessive increase in ink viscosity is suppressed, and production cost of the ink is further suppressed.

The content of the ultraviolet-absorbing fluorescent pigment in the infrared-absorbing ultraviolet-curable ink of the present invention relative to 100 parts by mass in total solids content of the infrared-absorbing ultraviolet-curable ink may be 0.1 parts by mass or more, 0.5 parts by mass or more, 1.0 parts by mass or more, 1.5 parts by mass or more, 2.0 parts by mass or more, 3.0 parts by mass or more, 4.0 parts by mass or more, or 5.0 parts by mass or more.

Ultraviolet-curable urethane acrylate resin

The infrared-absorbing ultraviolet-curable ink of the present invention comprises an ultraviolet-curable urethane acrylate resin as an indispensable component. By containing an ultraviolet-curable urethane acrylate resin, a printed object having an ultraviolet-curing ability and excellent base resistance, particularly wash resistance, can be provided.

The ultraviolet-curable urethane acrylate resin used in the present invention is not particularly limited as long as the resin is a polymer having a urethane bond and an acryloyl group derived from an acrylic acid.

The ultraviolet-curable urethane acrylate resin can be cured with ultraviolet rays by having an acryloyl group in the molecular chain. Further, a hydrogen bond can be formed with another molecule by having a urethane bond in the molecular chain. As a result, a printed object having excellent base resistance, particularly wash resistance, can be provided.

The acryloyl group contained in the ultraviolet-curable urethane acrylate resin is a group derived from an acrylic acid. The acrylic acid may be of a monofunctional type or a polyfunctional type.

The ultraviolet-curable urethane acrylate resin used in the present invention preferably comprises a plurality of acryloyl groups. The number of acryloyl groups contained in the ultraviolet-curable urethane acrylate resin may be 2 or greater, 3 or greater, 4 or greater, 6 or greater, or 9 or greater.

When the number of acryloyl groups is 3 or greater, crosslinks between molecules can be formed and base resistance, particularly wash resistance, can thus be further improved.

The urethane bond of the ultraviolet-curable urethane acrylate resin is formed by reacting an isocyanate group with a hydroxy group. The urethane bond of the ultraviolet-curable urethane acrylate resin used in the present invention may be formed either from an aromatic isocyanate compound or an aliphatic isocyanate compound.

The compound comprising a hydroxy group for forming a urethane bond of the ultraviolet-curable urethane acrylate resin may be either a polyether or a polyester, or may be a polymer or a low molecular weight diol.

Specifically, the ultraviolet-curable urethane acrylate resin used in the present invention may be a polymer having a certain molecular weight, an oligomer, or a prepolymer.

The content of the ultraviolet-curable urethane acrylate resin in the infrared-absorbing ultraviolet-curable ink of the present invention is not particularly limited. It is preferable that 1 to 50 parts by mass of the ultraviolet-curable urethane acrylate resin be contained relative to 100 parts by mass in total solids content of the infrared-absorbing ultraviolet-curable ink.

When the ratio of ultraviolet-curable urethane acrylate resin relative to 100 parts by mass in total solids content of the infrared-absorbing ultraviolet-curable ink is in the above range, the infrared-absorbing ultraviolet-curable ink has a moderate viscosity and a sufficient ultraviolet-curing ability, and can provide a printed object having sufficient base resistance, particularly excellent wash resistance.

The content of the ultraviolet-curable urethane acrylate resin in the infrared-absorbing ultraviolet-curable ink relative to 100 parts by mass in total solids content of the infrared-absorbing ultraviolet-curable ink may be 2 parts by mass or more, 3 parts by mass or more, 5 parts by mass or more, 10 parts by mass or more, 15 parts by mass or more, 20 parts by mass or more, or 25 parts by mass or more.

The content of the ultraviolet-curable urethane acrylate resin in the infrared-absorbing ultraviolet-curable ink relative to 100 parts by mass in total solids content of the infrared-absorbing ultraviolet-curable ink may be 45 parts by mass or less, 40 parts by mass or less, 35 parts by mass or less, 30 parts by mass or less, or 25 parts by mass or less.

In the infrared-absorbing ultraviolet-curable ink of the present invention, the ultraviolet-curable urethane acrylate resin is preferably 1 to 150 parts by mass relative to 100 parts by mass of an ultraviolet-curable acrylic resin, which is one of the indispensable components described below.

When the content of the ultraviolet-curable urethane acrylate resin relative to 100 parts by mass of the ultraviolet-curable acrylic resin is in the above range, an increase in viscosity caused by the ultraviolet-curable urethane acrylate resin is suppressed in the infrared-absorbing ultraviolet-curable ink of the present invention.

The blending amount of the ultraviolet-curable urethane acrylate resin relative to 100 parts by mass of the ultraviolet-curable acrylic resin may be 2 parts by mass or more, 3 parts by mass or more, 5 parts by mass or more, 10 parts by mass or more, 15 parts by mass or more, 20 parts by mass or more, 30 parts by mass or more, 40 parts by mass or more, or 50 parts by mass or more.

The blending amount of the ultraviolet-curable urethane acrylate resin relative to 100 parts by mass of the ultraviolet-curable acrylic resin may be 120 parts by mass or less, 100 parts by mass or less, 90 parts by mass or less, 80 parts by mass or less, 70 parts by mass or less, 60 parts by mass or less, or 50 parts by mass or less.

Ultraviolet-curable acrylic resin comprising no urethane bond

The infrared-absorbing ultraviolet-curable ink of the present invention comprises an ultraviolet-curable acrylic resin comprising no urethane bond as an indispensable component. The ultraviolet-curable acrylic resin comprising no urethane bond has an effect of satisfactorily dispersing the tungsten-based infrared-absorbing pigment and the ultraviolet-absorbing fluorescent pigment and suppressing an increase in viscosity caused by the ultraviolet-curable urethane acrylate resin.

In the infrared-absorbing ultraviolet-curable ink of the present invention, the ultraviolet-curable acrylic resin comprising no urethane bond is a material having a low viscosity and a high compatibility with the ultraviolet-curable urethane acrylate resin.

The ultraviolet-curable acrylic resin comprising no urethane bond is preferably a monomer, an oligomer, or a prepolymer, and particularly preferably a monomer, from the necessity of a low viscosity.

The monomer forming the ultraviolet-curable acrylic resin comprising no urethane bond used in the present invention is not particularly limited. Any known acrylic monomer used in ultraviolet-curable inks can be used.

Examples of such an acrylic monomer include acrylates having an ethylenically unsaturated bond. In the present invention, the acrylic monomer may be either a monofunctional acrylate or a polyfunctional acrylate. These can also be used in combination.

Examples of the monofunctional acrylate include caprolactone acrylate, isodecyl acrylate, isooctyl acrylate, isomyristyl acrylate, isostearyl acrylate, 2-ethylhexyl-diglycol diacrylate, 2-hydroxybutyl acrylate, 2-acryloyloxyethyl hexahydrophthalic acid, neopentyl glycol acrylic acid benzoic acid ester, isoamyl acrylate, lauryl acrylate, stearyl acrylate, butoxyethyl acrylate, ethoxy-diethylene glycol acrylate, methoxy-triethylene glycol acrylate, methoxy-polyethylene glycol acrylate, methoxydipropylene glycol acrylate, phenoxyethyl acrylate, phenoxy-polyethylene glycol acrylate, nonylphenol ethylene oxide adduct acrylate, tetrahydrofurfuryl acrylate, isobonyl acrylate, 2-hydroxyethyl acrylate, 2-hydroxypropyl acrylate, 2-hydroxy-3-phenoxypropyl acrylate, 2-acryloyloxyethyl-succinic acid, 2-acryloyloxyethyl-phthalic acid, and 2-acryloyloxyethyl-2-hydroxyethyl-phthalic acid.

Examples of the bifunctional acrylate include hydroxypivalic acid neopentyl glycol diacrylate, alkoxylated hexanediol diacrylate, polytetramethylene glycol diacrylate, trimethylolpropane acrylic acid benzoic acid ester, diethylene glycol diacrylate, triethylene glycol diacrylate, tetraethylene glycol diacrylate, polyethylene glycol (200) diacrylate, polyethylene glycol (400) diacrylate, polyethylene glycol (600) diacrylate, neopentyl glycol diacrylate, 1,3-butylene glycol diacrylate, 1,4-butanediol diacrylate, 1,6-hexanediol diacrylate, 1,9-nonanediol diacrylate, dimethylol-tricyclodecane diacrylate, and bisphenol A diacrylate.

Examples of the trifunctional or higher-polyfunctional acrylate include ethoxylated isocyanuric acid triacrylate, ε-caprolactone-modified tris-(2-acryloxyethyl) isocyanurate, pentaerythritol triacrylate, trimethylolpropane triacrylate, ditrimethylolpropane tetraacrylate, pentaerythritol tetraacrylate, dipentaerythritol polyacrylate, ethoxylated pentaerythritol tetraacrylate, and dipentaerythritol hexaacrylate.

Examples of an acrylic oligomer include polyester acrylate, epoxy acrylate, silicone acrylate, and polybutadiene acrylate.

Additional component

The infrared-absorbing ultraviolet-curable ink of the present invention, in addition to a tungsten-based infrared-absorbing pigment, an ultraviolet-absorbing fluorescent pigment, an ultraviolet-curable urethane acrylate resin, and an ultraviolet-curable acrylic resin comprising no urethane group, may comprise an additionally optional component.

The additional component is not particularly limited, and any known substance applied in the field of ultraviolet-curable inks can be used. Examples thereof include photopolymerization initiators, diluting solvents, dispersants, coupling agents, viscosity modifiers, surface tension modifiers, and pH adjusters.

(Photopolymerization initiator)

A photopolymerization initiator is a compound that generates radicals such as active oxygen by ultraviolet irradiation. When a photopolymerization initiator is used in the infrared-absorbing ultraviolet-curable ink of the present invention, the type thereof is not particularly limited as long as the ultraviolet-curable urethane acrylate resin and the ultraviolet-curable acrylic resin comprising no urethane bond, which are indispensable components, can be photopolymerized. A photopolymerization initiator conventionally used in ultraviolet-curable inks can be appropriately selected for use.

Examples of the photopolymerization initiator include acetophenones such as acetophenone, α-aminoacetophenone, 2,2-diethoxyacetophenone, p-dimethylaminoacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy)phenyl-(2-hydroxy-2-methylpropyl)ketone, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, 2-benzyl-2-dimethylamino-1-(4-morpholinophenyl)-butanone; benzoins such as benzoin, benzoin methyl ether, benzoin ethyl ether, benzoin-n-propyl ether, benzoin isopropyl ether, benzoin-n-butyl ether, benzoin isobutyl ether, benzoin dimethyl ketal, and benzoin peroxide; acylphosphine oxides such as 2,4,6-trimethoxybenzoin diphenyl phosphine oxide; benzyl and methylphenyl-glyoxyesters; benzophenones such as benzophenone, methyl-4-phenylbenzophenone, o-benzoyl benzoate, 2-chlorobenzophenone, 4,4'-dichlorobenzophenone, hydroxybenzophenone, 4-benzoyl-4'-methyl-diphenylsulfide, acryl-benzophenone, 3,3',4,4'-tetra(t-butylperoxycarbonl)benzophenone, and 3,3'-dimethyl-4-methoxybenzophenone; thioxanthones such as 2-methylthioxanthone, 2-isopropylthioxanthone, 2,4-dimethylthioxanthone, 2,4-diethylthioxanthone, 2-chlorothioxanthone, and 2,4-dichlorothioxanthone; aminobenzophenones such as Michlerketone and 4,4'-diethylaminobenzophenone; tetramethylthiuram monosulfide; azobisisobutyronitrile; di-tert-butyl peroxide; 10-butyl-2-chloroacridone; 2-ethylanthraquinone; 9,10-phenanthrenequinone; camphorquinone; and titanocenes, as well as combinations thereof.

A photopolymerization initiation aid such as ethyl 4-dimethylaminobenzoate or isoamyl 4-dimethylaminobenzoate may be used in combination with the photopolymerization initiator.

The use amount of photopolymerization initiator is not particularly limited, and for example, may be 1 part by mass or more, 2 parts by mass or more, 3 parts by mass or more, 4 parts by mass or more, or 5 parts by mass or more, and may be 20 parts by mass or less, 15 parts by mass or less, 10 parts by mass or less, 8 parts by mass or less, or 6 parts by mass or less, relative to a total of 100 parts by mass of the ultraviolet-curable urethane acrylate resin and the ultraviolet-curable acrylic resin comprising no urethane group.

(Solvent)

The infrared-absorbing ultraviolet-curable ink of the present invention may comprise a solvent for the purpose of adjusting dispersion and viscosity. The solvent is not particularly limited as long as the material contained in the ink of the present invention is dispersed or dissolved.

The solvent can include various organic solvents, for example, alcohols such as ethanol, propanol, butanol, isopropyl alcohol, isobutyl alcohol, and diacetone alcohol; ethers such as methyl ether, ethyl ether, and propyl ether; esters such as ethyl acetate; ketones such as acetone, methyl ethyl ketone, diethyl ketone, cyclohexanone, ethyl isobutyl ketone, and methyl isobutyl ketone; aromatic hydrocarbons such as toluene, xylene, and benzene; aliphatic hydrocarbons such as normal hexane, heptane, and cyclohexane; and glycol ethers such as propylene glycol monomethyl ether acetate and propylene glycol monoethyl ether.

When using a solvent in the infrared-absorbing ultraviolet-curable ink of the present invention, a single solvent or a mixed solvent of two or more may be used. In addition, when preparing the ink composition, solvents used for dispersing or diluting each component may be introduced as-is and mixed. Moreover, a diluting solvent may be added after the composition which becomes the ink is prepared, for the purpose of lowering viscosity.

An example thereof includes an aspect in which a first solvent constituting a dispersion comprising a tungsten-based infrared-absorbing pigment, a second solvent constituting an ultraviolet-curable urethane acrylate resin solution, and a third solvent constituting a solution of an ultraviolet-curable acrylic resin comprising no urethane bond are mixed. The solvents may be the same or different. A single solvent or a mixed solvent of two or more may be used.

The content of the solvent in the infrared-absorbing ultraviolet-curable ink of the present invention is not particularly limited, and for example, may be 0.1 parts by mass or more, 0.5 parts by mass or more, 1 part by mass or more, 3 parts by mass or more, or 5 parts by mass or more, and may be 50 parts by mass or less, 30 parts by mass or less, 20 parts by mass or less, 15 parts by mass or less, 10 parts by mass or less, 5 parts by mass or less, 3 parts by mass or less, or 1 part by mass or less, relative to 100 parts by mass of the infrared-absorbing ultraviolet-curable ink.

(Dispersant)

In order to enhance dispersibility of the tungsten-based infrared-absorbing pigment in the ink, a dispersant may be contained in the infrared-absorbing ultraviolet-curable ink of the present invention. The dispersant is not particularly limited, and examples thereof can include compounds having a functional group such as an amine, a hydroxyl group, a carboxyl group, or an epoxy group. These functional groups have a function of uniformly dispersing the tungsten-based infrared-absorbing pigment in the ink by being adsorbed on the surface of the tungsten-based infrared-absorbing pigment and preventing aggregation of the tungsten-based infrared-absorbing pigment.

The content of the dispersant in the ink relative to 100 parts by mass of the infrared-absorbing ultraviolet-curable ink may be 0.1 parts by mass or more, 0.3 parts by mass or more, 0.5 parts by mass or more, 1.0 parts by mass or more, 1.5 parts by mass or more, or 2.0 parts by mass or more, and may be 15 parts by mass or less, 10 parts by mass or less, 8.0 parts by mass or less, 5.0 parts by mass or less, 3.0 parts by mass or less, 2.0 parts by mass or less, or 1.5 parts by mass or less.

Production method for infrared-absorbing ultraviolet-curable ink

The production method for the infrared-absorbing ultraviolet-curable ink of the present invention is not particularly limited. Any known method used when forming an ink can be applied.

Examples thereof include a method of mixing a dispersion comprising a tungsten-based infrared-absorbing pigment and a first solvent, an ultraviolet-absorbing fluorescent pigment powder, a composition comprising an ultraviolet-curable urethane acrylate resin or the resin and a second solvent, and an ultraviolet-curable acrylic resin comprising no urethane bond.

For the purpose of lowering viscosity of the ink, a step of mixing with a diluting solvent to adjust the viscosity may be included.

In this case, the diluting solvent may be mixed, before obtaining a composition which becomes an ink, with at least one of the tungsten-based infrared-absorbing pigment dispersion, the composition comprising an ultraviolet-curable urethane acrylate resin or the resin and a second solvent, and the ultraviolet-curable acrylic resin comprising no urethane bond, or may be mixed after preparing a composition which becomes an ink, with the composition.

Application of infrared-absorbing ultraviolet-curable ink

The infrared-absorbing ultraviolet-curable ink of the present invention is not particularly limited in the application thereof, and can be used as a general printing ink, for example, a flexographic printing ink, a letterpress printing ink, an offset printing ink, an intaglio printing ink, a gravure printing ink, a screen printing ink, or an inkjet printing ink.

Of these, the infrared-absorbing ultraviolet-curable ink is preferably used as an offset printing ink, an intaglio printing ink, a screen printing ink, or an inkjet printing ink, since the ink is used in the authentication of a printed object.

In particular, the infrared-absorbing ultraviolet-curable ink of the present invention is used as an inkjet ink used in an inkjet head compatible with high-viscosity liquids and capable of forming fine patterns even with an ink having a high viscosity.

Infrared-absorbing printed object

Another aspect of the present invention is an infrared-absorbing printed object comprising a printed portion printed with the infrared-absorbing ultraviolet-curable ink of the present invention.

The infrared-absorbing ultraviolet-curable ink of the present invention is printed on a substrate and cured with ultraviolet rays, whereby a printed object comprising a printed portion printed formed from the infrared-absorbing ultraviolet-curable ink of the present invention can be provided.

The substrate is not particularly limited. Examples thereof can include paper substrates such as woodfree paper, coated paper, art paper, cast-coated paper, foil paper, recycled paper, impregnated paper, and variable information paper; film substrates such as polyester films, polypropylene films, polystyrene films, vinyl chloride films, polyimide films, and variable information films; and fabric substrates such as woven fabrics, knitted fabrics, and nonwoven fabrics.

The infrared-absorbing printed object of the present invention may be, for example, a banknote, a security, or a card.

An authentic printed object obtained using the infrared-absorbing ultraviolet-curable ink of the present invention has both an infrared absorption property and an ultraviolet absorption property. Therefore, the authentication of a printed object of unknown authenticity is made into a two-stage evaluation consisting of a primary evaluation and a secondary evaluation. The primary evaluation is carried out using an ultraviolet (UV)-emitting device, which is generally inexpensive equipment, and an infrared absorption evaluation using dedicated equipment such as an infrared camera can be carried out as a secondary evaluation only when there is a likelihood of a counterfeit or when security is required.

Since a simple ultraviolet (UV) absorption evaluation as the primary evaluation can limit the objects subjected to the secondary evaluation, the convenience of authentication can be improved and the introduction cost of expensive infrared evaluation devices can be suppressed.

EXAMPLES

Hereinafter, the present invention will be further described in detail with reference to the Examples and Comparative Examples. However, the present invention is not limited thereto.

Materials

The materials used in the Examples and Comparative Examples are indicated below.

(1) Tungsten-based infrared-absorbing pigment

· Cesium tungsten oxide (CWO) dispersion liquid (YMS-01A-2, Sumitomo Metal Mining Co., Ltd.): CWO content ratio of 25% by mass

Hexagonal $Cs_{0.33}WO_3$: 25% by mass
Propylene glycol monomethyl ether acetate: 58.9% by mass
Dipropylene glycol monomethyl ether: 1.86% by mass
Butyl acetate: 1.74% by mass
Dispersant: 12.5% by mass

(2) Ultraviolet-absorbing fluorescent pigment

· Organic fluorescent pigment (Lumikol™ 1000, Nippon Keiko Kagaku Co., Ltd., quinazolone derivative, white powder)

(3) Ultraviolet-curable urethane acrylate resin

· LUXYDIR™ WLS-373, DIC Corporation: 6 acryloyl groups per molecule, resin content of 100%
· LUXYDIR™ V-4260, DIC Corporation: 3 acryloyl groups per molecule, resin content of 99% or greater
· LUXYDIR™ V-4263, DIC Corporation: 3 acryloyl groups per molecule, resin content of 99% or greater

(4) Ultraviolet-curable acrylic resin comprising no urethane group

· Acrylic monomer (BESTCURE UV monomer for dispersion, T&K TOKA Corporation): 100% photosensitive monomer

(5) Solvent-soluble acrylic resin

· Acrylic resin (ACRYDIC™ A-814, DIC Corporation)

Acrylic resin (Tg: 85 °C): 50% by mass
Toluene: 42.5% by mass
Ethyl acetate: 7.5% by mass

(6) Photopolymerization initiator

· Photo-radical initiator (IRGACURE™ 500, BASF SE)

Example 1

10.0 g of a cesium tungsten oxide (CWO) dispersion liquid (YMS-01A-2, Sumitomo Metal Mining Co., Ltd.) as (A) a tungsten-based infrared-absorbing pigment, 2.5 g of an organic fluorescent pigment (Lumikol™ 1000, Nippon Keiko Kagaku Co., Ltd., quinazolone derivative, white powder) as (B) an ultraviolet-absorbing fluorescent pigment (UV-FP), 5.0 g of LUXIDIA™ WLS-373 (DIC Corporation) as (C) an ultraviolet-curable urethane acrylate resin, 30.0 g of an acrylic monomer (BESTCURE UV monomer for dispersion, T&K TOKA Corporation) as (D) an ultraviolet-curable acrylic resin comprising no urethane bond, and IRGACURE™ 500 (BASF SE) as (G) a photopolymerization initiator were mixed to prepare an infrared-absorbing ultraviolet-curable ink.
The (G) photopolymerization initiator was added so as to be 4 parts by mass relative to a total of 100 parts by mass of the (C) ultraviolet-curable urethane acrylate resin and the ultraviolet-curable acrylic resin comprising no urethane bond.

Examples 2 to 8 and Comparative Examples 1 to 4

The blending ratios of the components were changed as indicated in Table 1 to prepare the inks of Comparative Examples 1 to 4. The blending amount of the (G) photopolymerization initiator was set so as to be 4 parts by mass relative to a total of 100 parts by mass of the (C) ultraviolet-curable urethane acrylate resin and the (D) ultraviolet-curable acrylic resin comprising no urethane bond, in the same manner as in Example 1.
In Comparative Example 1, the cesium tungsten oxide (CWO) dispersion liquid (YMS-01A-2, Sumitomo Metal Mining Co., Ltd.) did not mix with the ultraviolet-curable acrylic monomer, causing separation and precipitation of cesium tungsten oxide. Thus, Comparative Example 1 could not be used as an ink.

Evaluation

(Production of printed object)

A polyethylene terephthalate film (CD942, KOLON INDUSTRIES, INC.) and paper (OCR paper, Oji Paper Co., Ltd.) were prepared as substrates. The ink prepared in each of the Examples and Comparative Examples was applied to each of the substrates using a wire bar at an application amount of 7.5 g/m$^2$, heat-dried at 80 °C, and then cured with ultraviolet irradiation to obtain a printed object. The obtained printed object was cut to a size of 2.5 cm × 4 cm.

(Measurement of infrared reflectance)

For the obtained printed object, the infrared reflectance was measured in accordance with JIS K 0115 using a UV-vis reflection spectrum measuring device (UH4150 UV-visible/NIR spectrophotometer, Hitachi High-Tech Corporation). Each test piece was measured three times (N = 3). The lower the infrared reflectance numerical value, the higher the infrared absorption. The infrared reflectance at a wavelength of 1000 nm is shown in Table 1.

(Measurement of fluorescence intensity)

The obtained printed object was irradiated with light at a wavelength of 365 nm and fluorescence intensity was measured using a FP-6600 manufactured by JASCO Corporation, in accordance with JIS K 0120. Fluorescence intensity was calculated from the spectrum value at a wavelength of 522 nm. Each test piece was measured three times (N = 3). The results are shown in Table 1.
The fluorescence intensity measurements in Examples 5, 6, and 8 were carried out using a light-attenuating plate have a light transmittance of about 14% in order to match the measurement range of the measuring device used.

(Wash resistance test)

A washing resistance test was then carried out on the produced printed object. Specifically, the printed object was immersed in an aqueous solution at a temperature of 90 °C for 30 min. The aqueous solution was prepared by adding 0.5% by weight of a laundry detergent (Attack™, Kao Corporation) and 1% by weight of sodium carbonate to distilled water. After immersion, the printed object was washed with water and dried.

(Measurement of infrared reflectance after wash resistance test)

The infrared reflectance for the printed object after the washing resistance test was measured in the same manner as above. The infrared reflectance at 1000 nm is shown in Table 1.

(Residual rate of tungsten-based infrared-absorbing pigment after wash resistance test)

A residual rate of the tungsten-based infrared-absorbing pigment after the wash resistance test was determined by the following formula using the infrared reflectance at a wavelength of 1000 nm before the wash resistance test and the infrared reflectance at a wavelength of 1000 nm after the wash resistance test. The results are shown in Table 1. The resulting residual rate of the tungsten-based infrared-absorbing pigment is an index for assessing how much the infrared-absorbing function can be maintained.

$$\text{Pigment residual rate (\%)} = (100 - \text{infrared reflectance after test})/(100 - \text{infrared reflectance before test}) \times 100$$

(Infrared camera observation)

The printed object after the washing resistance test was observed with an infrared camera. For the observation, an infrared LED at a wavelength of 940 nm was used for infrared illumination, and a filter for cutting light at a wavelength of 820 nm or less was used. The printed object was observed under the observation conditions of a pixel count of 250,000 pixels, a lens angle of view of 67° horizontally and 47° vertically, and a drawing range of 22 × 18 mm and assessed according to the following evaluation criteria. The results are shown in Table 1.

AA: Coated portion can be very clearly distinguished.
A: Coated portion can be clearly distinguished.
B: Coated portion can be distinguished by directly comparing and observing non-coated and coated portions.
C: Coated portion cannot be distinguished even by directly comparing and observing non-coated and coated portions.

(Measurement of fluorescence intensity after wash resistance test)

The fluorescence intensity for the printed object after the washing resistance test was measured in the same manner as above. The results are shown in Table 1.

(Residual rate of ultraviolet-absorbing fluorescent pigment after wash resistance test)

A residual rate of the ultraviolet-absorbing fluorescent pigment after the wash resistance test was determined by the following formula using the fluorescence intensity at a wavelength of 522 nm before the wash resistance test and the fluorescence intensity at a wavelength of 522 nm after the wash resistance test. The results are shown in Table 1. The resulting residual rate of the ultraviolet-absorbing fluorescent pigment is an index for assessing how much the ultraviolet-absorbing fluorescent pigment can be maintained.

$$\text{Fluorescence intensity residual rate } (\%) = (\text{value after test})/(\text{value before test}) \times 100$$

(Ultraviolet irradiation observation)

The printed object after the washing resistance test was irradiated with UV light at a wavelength of 375 nm and the state of fluorescence emission was visually evaluated according to the following evaluation criteria. The results are shown in Table 1.

A: Coated portion can be clearly distinguished.
C: Coated portion cannot be distinguished even by directly comparing and observing the non-coated and coated portions.

[Table 1]

## TABLE 1.

| | | | | Example 1 | Example 2 | Example 3 | Example 4 |
|---|---|---|---|---|---|---|---|
| Ink composition | (A) CWO dispersion liquid | YMS-01A-2 | Addition amount | 10.0 | 10.0 | 10.0 | 10.0 |
| | | | Pigment solids (g) | 2.5 | 2.5 | 2.5 | 2.5 |
| | | | Total solids (g) | 3.75 | 3.75 | 3.75 | 3.75 |
| | (B) UV-FP | Lumikol 1000 | Addition amount (g) | 2.5 | 2.5 | 2.5 | 2.5 |
| | | | Solids (g) | 2.5 | 2.5 | 2.5 | 2.5 |
| | (C) Ultraviolet-curable urethane acrylate resin | WLS-373 | Addition amount (g) | 5.0 | 21.0 | 17.5 | 3.0 |
| | | | Solids (g) | 5.0 | 21.0 | 17.5 | 3.0 |
| | (D) Ultraviolet-curable acrylic resin | BESTCURE UV monomer for dispersion | Addition amount (g) | 30.0 | 14.0 | 17.5 | 32.0 |
| | | | Solids (g) | 30.0 | 14.0 | 17.5 | 32.0 |
| | (E) Solvent-soluble acrylic resin | ACRYDIC A-814 | Addition amount (g) | - | - | - | - |
| | | | Solids (g) | - | - | - | - |
| | (F) Ethyl acetate | | Addition amount (g) | - | - | - | - |
| | (G) Polymerization initiator | IRGACURE 500 | Addition amount (g) | 1.4 | 1.4 | 1.4 | 1.4 |
| | Total mass of ink composition (g) | | | 48.9 | 48.9 | 48.9 | 48.9 |
| | Total solids content (TSC) of ink composition (g) | | | 42.7 | 42.7 | 42.7 | 42.7 |
| | Component (C) amount to 100 parts by mass of component (D) (parts by mass) | | | 16.7 | 150.0 | 100.0 | 9.4 |
| | CWO amount to 100 parts by mass TSC (parts by mass) | | | 5.9 | 5.9 | 5.9 | 5.9 |
| | Component (B) amount to 100 parts by mass TSC (parts by mass) | | | 5.9 | 5.9 | 5.9 | 5.9 |
| | Component (C) amount to 100 parts by mass TSC (parts by mass) | | | 11.7 | 49.2 | 41.0 | 7.0 |
| Washing resistance test results | CWO | Reflectance 1000 nm (N = 3) | PET Before test | 29.8 | 31.7 | 32.9 | 34.3 |
| | | | PET After test | 85.0 | 37.4 | 36.0 | 98.9 |
| | | | PET Pigment residual rate (%) | 21.3 | 91.7 | 95.4 | 1.6 |
| | | | OCR Before test | 10.3 | - | - | - |
| | | | OCR After test | 59.1 | - | - | - |
| | | | OCR Pigment residual rate (%) | 45.6 | - | - | - |
| | | IR camera observation | PET | AA | AA | AA | A |
| | | | OCR | AA | - | - | - |
| | UV-FP | Fluorescence intensity 522 nm (N = 3) | PET Before test | 536.8 | 881.2 | 880.8 | 541.9 |
| | | | PET After test | 27.2 | 878.5 | 878.5 | 29.6 |
| | | | PET Pigment residual rate (%) | 5.1 | 99.7 | 99.7 | 5.5 |
| | | UV irradiation observation | PET | A | A | A | A |

(TABLE 1. to be continued)

[Table 2]

**TABLE 1. (continuation)**

| | | | | Example 5 | Example 6 | Example 7 | Example 8 |
|---|---|---|---|---|---|---|---|
| Ink composition | (A) CWO dispersion liquid | YMS-01A-2 | Addition amount | 1.5 | 44.0 | 10.0 | 10.0 |
| | | | Pigment solids (g) | 0.4 | 11.0 | 2.5 | 2.5 |
| | | | Total solids (g) | 0.56 | 16.50 | 3.75 | 3.75 |
| | (B) UV-FP | Lumikol 1000 | Addition amount (g) | 2.5 | 2.5 | 0.3 | 10.0 |
| | | | Solids (g) | 2.5 | 2.5 | 0.3 | 10.0 |
| | (C) Ultraviolet-curable urethane acrylate resin | WLS-373 | Addition amount (g) | 17.5 | 17.5 | 17.5 | 17.5 |
| | | | Solids (g) | 17.5 | 17.5 | 17.5 | 17.5 |
| | (D) Ultraviolet-curable acrylic resin | BESTCURE UV monomer for dispersion | Addition amount (g) | 17.5 | 17.5 | 17.5 | 17.5 |
| | | | Solids (g) | 17.5 | 17.5 | 17.5 | 17.5 |
| | (E) Solvent-soluble acrylic resin | ACRYDIC A-814 | Addition amount (g) | - | - | - | - |
| | | | Solids (g) | - | - | - | - |
| | (F) Ethyl acetate | | Addition amount (g) | - | - | - | - |
| | (G) Polymerization initiator | IRGACURE 500 | Addition amount (g) | 1.4 | 1.4 | 1.4 | 1.4 |
| Total mass of ink composition (g) | | | | 40.4 | 82.9 | 46.7 | 56.4 |
| Total solids content (TSC) of ink composition (g) | | | | 39.5 | 55.4 | 40.5 | 50.2 |
| Component (C) amount to 100 parts by mass of component (D) (parts by mass) | | | | 100.0 | 100.0 | 100.0 | 100.0 |
| CWO amount to 100 parts by mass TSC (parts by mass) | | | | 1.0 | 19.9 | 6.2 | 5.0 |
| Component (B) amount to 100 parts by mass TSC (parts by mass) | | | | 6.3 | 4.5 | 0.7 | 19.9 |
| Component (C) amount to 100 parts by mass TSC (parts by mass) | | | | 44.3 | 31.6 | 43.3 | 34.9 |
| Washing resistance test results | CWO | Reflectance 1000 nm (N = 3) | PET Before test | 77.4 | 5.9 | 32.9 | 32.7 |
| | | | PET After test | 82.6 | 6.2 | 41.6 | 76.6 |
| | | | PET Pigment residual rate (%) | 77.1 | 99.6 | 87.1 | 34.8 |
| | | | OCR Before test | - | - | - | - |
| | | | OCR After test | - | - | - | - |
| | | | OCR Pigment residual rate (%) | - | - | - | - |
| | | IR camera observation | PET | AA | AA | AA | AA |
| | | | OCR | - | - | - | - |
| | UV-FP | Fluorescence intensity 522 nm (N = 3) | PET Before test | 150.3 *) | 55.0 *) | 107.1 | 238.4 *) |
| | | | PET After test | 142.2 *) | 51.1 *) | 82.4 | 124.5 *) |
| | | | PET Pigment residual rate (%) | 94.6 | 93.0 | 76.9 | 52.2 |
| | | UV irradiation observation | PET | A | A | A | A |

(TABLE 1. to be continued)

*) In Examples 5, 6, and 8, a light-attenuating plate was used during fluorescence intensity measurement.

[Table 3]

## TABLE 1. (continuation)

| | | | | Comparative Example 1 | Comparative Example 2 | Comparative Example 3 | Comparative Example 4 |
|---|---|---|---|---|---|---|---|
| Ink composition | (A) CWO dispersion liquid | YMS-01A-2 | Addition amount | 10.0 | 0.0 | 10.0 | 10.0 |
| | | | Pigment solids (g) | 2.5 | 0.0 | 2.5 | 2.5 |
| | | | Total solids (g) | 3.75 | 0.0 | 3.75 | 3.75 |
| | (B) UV-FP | Lumikol 1000 | Addition amount (g) | - | 2.5 | 2.5 | 2.5 |
| | | | Solids (g) | - | 2.5 | 2.5 | 2.5 |
| | (C) Ultraviolet-curable urethane acrylate resin | WLS-373 | Addition amount (g) | - | - | - | - |
| | | | Solids (g) | - | - | - | - |
| | (D) Ultraviolet-curable acrylic resin | BESTCURE UV monomer for dispersion | Addition amount (g) | 35.0 | 35.0 | 35.0 | 30.0 |
| | | | Solids (g) | 35.0 | 35.0 | 35.0 | 30.0 |
| | (E) Solvent-soluble acrylic resin | ACRYDIC A-814 | Addition amount (g) | - | - | - | 10.0 |
| | | | Solids (g) | - | - | - | 5.0 |
| | (F) Ethyl acetate | | Addition amount (g) | - | - | - | 10.0 |
| | (G) Polymerization initiator | IRGACURE 500 | Addition amount (g) | 1.4 | 1.4 | 1.4 | 1.2 |
| | Total mass of ink composition (g) | | | 46.4 | 38.9 | 48.9 | 63.7 |
| | Total solids content (TSC) of ink composition (g) | | | 40.2 | 38.9 | 42.7 | 42.5 |
| | Component (C) amount to 100 parts by mass of component (D) (parts by mass) | | | 0.0 | 0.0 | 0.0 | 0.0 |
| | CWO amount to 100 parts by mass TSC (parts by mass) | | | 6.2 | 0.0 | 5.9 | 5.9 |
| | Component (B) amount to 100 parts by mass TSC (parts by mass) | | | 0.0 | 6.4 | 5.9 | 5.9 |
| | Component (C) amount to 100 parts by mass TSC (parts by mass) | | | 0.0 | 0.0 | 0.0 | 0.0 |
| Washing resistance test results | CWO | Reflectance 1000 nm (N = 3) | PET Before test | CWO precipitated; not printable | - | 40.3 | 39.9 |
| | | | PET After test | | - | 99.2 | 99.0 |
| | | | PET Pigment residual rate (%) | | - | 1.4 | 1.7 |
| | | | OCR Before test | | - | 13.1 | 12.7 |
| | | | OCR After test | | - | 75.7 | 82.8 |
| | | | OCR Pigment residual rate (%) | | - | 27.9 | 19.7 |
| | | IR camera observation | PET | | - | A | A |
| | | | OCR | | - | A | A |
| | UV-FP | Fluorescence intensity 522 nm (N = 3) | PET Before test | | 354.2 | 444.4 | 622.4 |
| | | | PET After test | | 353.6 | 18.2 | 19.9 |
| | | | PET Pigment residual rate (%) | | 99.8 | 4.1 | 3.2 |
| | | UV irradiation observation | PET | | A | C | C |

(End of TABLE 1.)

Comparative Example 2, an ink blended with only an ultraviolet-absorbing fluorescent pigment, had a highly satisfactory fluorescence intensity even after the wash resistance test. However, Comparative Example 3, an ink in which an ultraviolet-absorbing fluorescent pigment and a tungsten-based infrared-absorbing pigment were used in combination, resulted in significant decrease in fluorescence intensity after the wash resistance test. Specifically, it was determined that washing resistance of the ultraviolet-absorbing fluorescent pigment was significantly decreased by the presence of the tungsten-based infrared-absorbing pigment.

However, Examples 1 to 8 containing an ultraviolet-curable urethane acrylate resin resulted in maintaining both infrared-absorbing ability and fluorescence intensity even after the wash resistance test. This is presumably because hydrogen bonds were formed from the urethane bonds in the ultraviolet-curable urethane acrylate resin, and a resin film composed of the ultraviolet-curable urethane acrylate resin was formed around the tungsten-based infrared-absorbing pigment and the ultraviolet-absorbing fluorescent pigment.

Reference Examples 1 to 10 and Comparative Reference Examples 1 to 3

The inks of Reference Examples 1 to 10 and Comparative Reference Examples 1 to 3 were prepared by changing the blending ratios of the components as indicated in Table 2. The blending amount of the polymerization initiator was set so as to be 4 parts by mass relative to a total of 100 parts by mass of the ultraviolet-curable urethane acrylate resin and the ultraviolet-curable acrylic resin comprising no urethane bond, in the same manner as in Example 1.

The solvent-soluble acrylic resin (ACRYDIC™ A-814, DIC Corporation) used in Comparative Reference Example 2 had a high viscosity and was thus diluted using the equivalent amount of ethyl acetate, followed by mixing with a cesium tungsten oxide (CWO) dispersion liquid (YMS-01A-2, Sumitomo Metal Mining Co., Ltd.).

In Comparative Reference Example 1, the cesium tungsten oxide (CWO) dispersion liquid (YMS-01A-2, Sumitomo Metal Mining Co., Ltd.) did not mix with the ultraviolet-curable acrylic monomer, causing separation and precipitation of cesium tungsten oxide. Thus, Comparative Reference Example 1 could not be used as an ink.

In Comparative Example 3, since the ratio of ultraviolet-curable urethane acrylate resin was high, the resulting composition had an excessively high viscosity and could not be used as an ink.

Evaluation

A printed object was produced in the same manner as in Example 1, infrared reflectance was measured before and after the wash resistance test in the same manner as in Example 1, and a residual rate of the tungsten-based infrared-absorbing pigment after washing was calculated. In addition, the printed object after the washing resistance test was observed with an infrared camera and evaluated in the same manner as in Example 1. The results are shown in Table 2.

(Measurement of viscosity)

The viscosities of the resulting inks were measured at the temperatures indicated in Table 2, using a tuning fork vibration viscometer (SV-1A (natural frequency of 30 Hz), A&D Company, Limited), in accordance with JIS Z 8803. The measurement sample was set to 5 mL. The results are shown in Table 2.

[Table 4]

**TABLE 2.**

| | | | | | Reference Example 1 | Reference Example 2 | Reference Example 3 | Reference Example 4 |
|---|---|---|---|---|---|---|---|---|
| Ink composition | (A) CWO dispersion liquid | YMS-01A-2 | | Addition amount | 10.0 | 10.0 | 10.0 | 10.0 |
| | | | | Pigment solids (g) | 2.5 | 2.5 | 2.5 | 2.5 |
| | | | | Total solids (g) | 3.75 | 3.75 | 3.75 | 3.75 |
| | (C) Ultraviolet-curable urethane acrylate resin | WLS-373 | | Addition amount (g) | 5.0 | - | - | 2.0 |
| | | | | Solids (g) | 5.0 | - | - | 2.0 |
| | | V-4260 | | Addition amount (g) | - | 5.0 | - | - |
| | | | | Solids (g) | - | 5.0 | - | - |
| | | V-4263 | | Addition amount (g) | - | - | 5.0 | - |
| | | | | Solids (g) | - | - | 5.0 | - |
| | (D) Ultraviolet-curable acrylic resin | BESTCURE UV monomer for dispersion | | Addition amount (g) | 30.0 | 30.0 | 30.0 | 33.0 |
| | | | | Solids (g) | 30.0 | 30.0 | 30.0 | 33.0 |
| | (E) Solvent-soluble acrylic resin | ACRYDIC A-814 | | Addition amount (g) | - | - | - | - |
| | | | | Solids (g) | - | - | - | - |
| | (F) Ethyl acetate | | | Addition amount (g) | - | - | - | - |
| | (G) Polymerization initiator | IRGACURE 500 | | Addition amount (g) | 1.4 | 1.4 | 1.4 | 1.4 |
| | Total mass of ink composition (g) | | | | 46.4 | 46.4 | 46.4 | 46.4 |
| | Total solids content (TSC) of ink composition (g) | | | | 40.2 | 40.2 | 40.2 | 40.2 |
| | Component (C) amount to 100 parts by mass of component (D) (parts by mass) | | | | 16.7 | 16.7 | 16.7 | 6.1 |
| | CWO amount to 100 parts by mass TSC (parts by mass) | | | | 6.2 | 6.2 | 6.2 | 6.2 |
| | Component (C) amount to 100 parts by mass TSC (parts by mass) | | | | 12.5 | 12.5 | 12.5 | 5.0 |
| Washing resistance test results | CWO | Reflectance 1000 nm (N = 3) | PET | Before test | 21.3 | 26.1 | 24.1 | 32.1 |
| | | | | After test | 42.3 | 93.9 | 97.6 | 97.9 |
| | | | | Pigment residual rate (%) | 73.4 | 8.3 | 3.2 | 3.1 |
| | | | OCR | Before test | 11.9 | 11.2 | 12.5 | 11.9 |
| | | | | After test | 31.0 | 44.9 | 46.8 | 33.6 |
| | | | | Pigment residual rate (%) | 78.3 | 62.0 | 60.8 | 75.4 |
| | | IR camera observation | PET | | AA | AA | AA | AA |
| | | | OCR | | AA | AA | AA | AA |
| Viscosity | | | | (mPa·s) | 15.2 | - | - | 11.4 |
| | | | | Liquid temperature (°C) | 25.3 | - | - | 25.6 |

(TABLE 2. to be continued)

[Table 5]

## TABLE 2. (continuation)

| | | | | | Reference Example 5 | Reference Example 6 | Reference Example 7 | Reference Example 8 |
|---|---|---|---|---|---|---|---|---|
| Ink composition | (A) CWO dispersion liquid | YMS-01A-2 | | Addition amount | 10.0 | 10.0 | 10.0 | 10.0 |
| | | | | Pigment solids (g) | 2.5 | 2.5 | 2.5 | 2.5 |
| | | | | Total solids (g) | 3.75 | 3.75 | 3.75 | 3.75 |
| | (C) Ultraviolet-curable urethane acrylate resin | WLS-373 | | Addition amount (g) | 3.5 | 17.5 | 35.7 | 2.4 |
| | | | | Solids (g) | 3.5 | 17.5 | 35.7 | 2.4 |
| | | V-4260 | | Addition amount (g) | - | - | - | - |
| | | | | Solids (g) | - | - | - | - |
| | | V-4263 | | Addition amount (g) | - | - | - | - |
| | | | | Solids (g) | - | - | - | - |
| | (D) Ultraviolet-curable acrylic resin | BESTCURE UV monomer for dispersion | | Addition amount (g) | 31.5 | 17.5 | 214.3 | 14.6 |
| | | | | Solids (g) | 31.5 | 17.5 | 214.3 | 14.6 |
| | (E) Solvent-soluble acrylic resin | ACRYDIC A-814 | | Addition amount (g) | - | - | - | - |
| | | | | Solids (g) | - | - | - | - |
| | (F) Ethyl acetate | | | Addition amount (g) | - | - | - | - |
| | (G) Polymerization initiator | IRGACURE 500 | | Addition amount (g) | 1.4 | 1.4 | 10.0 | 0.68 |
| | Total mass of ink composition (g) | | | | 46.4 | 46.4 | 270.0 | 27.7 |
| | Total solids content (TSC) of ink composition (g) | | | | 40.2 | 40.2 | 263.8 | 21.4 |
| | Component (C) amount to 100 parts by mass of component (D) (parts by mass) | | | | 11.1 | 100.0 | 16.7 | 16.7 |
| | CWO amount to 100 parts by mass TSC (parts by mass) | | | | 6.2 | 6.2 | 0.9 | 11.7 |
| | Component (C) amount to 100 parts by mass TSC (parts by mass) | | | | 8.7 | 43.6 | 13.5 | 11.3 |
| Washing resistance test results | CWO | Reflectance 1000 nm (N = 3) | PET | Before test | 15.2 | 16.0 | 49.5 | 5.7 |
| | | | | After test | 66.0 | 15.9 | 54.4 | 25.3 |
| | | | | Pigment residual rate (%) | 40.1 | 99.6 | 90.3 | 79.2 |
| | | | OCR | Before test | 13.5 | 11.4 | - | 10.9 |
| | | | | After test | 35.2 | 32.9 | - | 29.0 |
| | | | | Pigment residual rate (%) | 74.9 | 75.7 | - | 79.7 |
| | | IR camera observation | PET | | AA | AA | AA | AA |
| | | | OCR | | AA | AA | - | AA |
| Viscosity | | | | (mPa·s) | 12.2 | 56.5 | - | - |
| | | | | Liquid temperature (°C) | 25.6 | 26.6 | - | - |

(TABLE 2. to be continued)

[Table 6]

## TABLE 2.

| | | | | Reference Example 9 | Reference Example 10 |
|---|---|---|---|---|---|
| Ink composition | (A) CWO dispersion liquid | YMS-01A-2 | Addition amount | 10.0 | 10.0 |
| | | | Pigment solids (g) | 2.5 | 2.5 |
| | | | Total solids (g) | 3.75 | 3.75 |
| | (C) Ultraviolet-curable urethane acrylate resin | WLS-373 | Addition amount (g) | 1.71 | 1.0 |
| | | | Solids (g) | 1.71 | 1.0 |
| | | V-4260 | Addition amount (g) | - | - |
| | | | Solids (g) | - | - |
| | | V-4263 | Addition amount (g) | - | - |
| | | | Solids (g) | - | - |
| | (D) Ultraviolet-curable acrylic resin | BESTCURE UV monomer for dispersion | Addition amount (g) | 10.3 | 34.0 |
| | | | Solids (g) | 10.3 | 34.0 |
| | (E) Solvent-soluble acrylic resin | ACRYDIC A-814 | Addition amount (g) | - | - |
| | | | Solids (g) | - | - |
| | (F) Ethyl acetate | | Addition amount (g) | - | - |
| | (G) Polymerization initiator | IRGACURE 500 | Addition amount (g) | 0.48 | 1.4 |
| | Total mass of ink composition (g) | | | 22.5 | 46.4 |
| | Total solids content (TSC) of ink composition (g) | | | 16.2 | 40.2 |
| | Component (C) amount to 100 parts by mass of component (D) (parts by mass) | | | 16.6 | 2.9 |
| | CWO amount to 100 parts by mass TSC (parts by mass) | | | 15.4 | 6.2 |
| | Component (C) amount to 100 parts by mass TSC (parts by mass) | | | 10.5 | 2.5 |
| Washing resistance test results | CWO | Reflectance 1000 nm (N = 3) | PET Before test | - | - |
| | | | PET After test | - | - |
| | | | PET Pigment residual rate (%) | - | - |
| | | | OCR Before test | 9.9 | 10.5 |
| | | | OCR After test | 28.5 | 28.6 |
| | | | OCR Pigment residual rate (%) | 79.4 | 79.8 |
| | | IR camera observation | PET | - | - |
| | | | OCR | AA | AA |
| Viscosity | | | (mPa·s) | - | 10.1 |
| | | | Liquid temperature (°C) | - | 26.9 |

(TABLE 2. to be continued)

[Table 7]

## TABLE 2.

| | | | | Comparative Reference Example 1 | Comparative Reference Example 2 | Comparative Reference Example 3 |
|---|---|---|---|---|---|---|
| Ink composition | (A) CWO dispersion liquid | YMS-01A-2 | Addition amount | 10.0 | 10.0 | 10.0 |
| | | | Pigment solids (g) | 2.5 | 2.5 | 2.5 |
| | | | Total solids (g) | 3.75 | 3.75 | 3.75 |
| | (C) Ultraviolet-curable urethane acrylate resin | WLS-373 | Addition amount (g) | - | - | 35.0 |
| | | | Solids (g) | - | - | 35.0 |
| | | V-4260 | Addition amount (g) | - | - | - |
| | | | Solids (g) | - | - | - |
| | | V-4263 | Addition amount (g) | - | - | - |
| | | | Solids (g) | - | - | - |
| | (D) Ultraviolet-curable acrylic resin | BESTCURE UV monomer for dispersion | Addition amount (g) | 35.0 | 30.0 | - |
| | | | Solids (g) | 35.0 | 30.0 | - |
| | (E) Solvent-soluble acrylic resin | ACRYDIC A-814 | Addition amount (g) | - | 10.0 | - |
| | | | Solids (g) | - | 5.0 | - |
| | (F) Ethyl acetate | | Addition amount (g) | - | 10.0 | - |
| | (G) Polymerization initiator | IRGACURE 500 | Addition amount (g) | 1.4 | 1.2 | 1.4 |
| | Total mass of ink composition (g) | | | 46.4 | 61.2 | 46.4 |
| | Total solids content (TSC) of ink composition (g) | | | 40.2 | 40.0 | 40.2 |
| | Component (C) amount to 100 parts by mass of component (D) (parts by mass) | | | 0.0 | 0.0 | - |
| | CWO amount to 100 parts by mass TSC (parts by mass) | | | 6.2 | 6.3 | 6.2 |
| | Component (C) amount to 100 parts by mass TSC (parts by mass) | | | 0.0 | 0.0 | 87.2 |
| Washing resistance test results | CWO | Reflectance 1000 nm (N = 3) | PET Before test | CWO precipitated; not printable | 45.4 | Not printable due to high viscosity |
| | | | PET After test | | 99.4 | |
| | | | PET Pigment residual rate (%) | | 1.1 | |
| | | | OCR Before test | | 12.6 | |
| | | | OCR After test | | 72.3 | |
| | | | OCR Pigment residual rate (%) | | 31.7 | |
| | | IR camera observation | PET | | A | |
| | | | OCR | | A | |
| Viscosity | | | (mPa·s) | - | - | 435 |
| | | | Liquid temperature (°C) | - | - | 25.2 |

(End of TABLE 2.)

The residual rates of the tungsten-based infrared-absorbing pigments of Reference Examples 1 to 10 were higher than those of Comparative Reference Example 2 for both the polyethylene terephthalate film application and the OCR application. As a result, Reference Examples 1 to 10 had a remarkably higher effect on washing resistance. Presumably, hydrogen bonds are formed from the urethane bonds of the ultraviolet-curable urethane acrylate resin, and a strong resin film is formed by the ultraviolet-curable urethane acrylate resin around the tungsten-based infrared-absorbing pigment.

By comparing Reference Example 1 with Reference Examples 2 and 3, it was determined that the larger the number of acryloyl groups present in the ultraviolet-curable urethane acrylate resin, the higher the residual rate of the tungsten-based infrared-absorbing pigment in both the polyethylene terephthalate film application and the OCR application. Presumably, when a printed object is formed, an ultraviolet-curable urethane acrylate resin having a larger number of acryloyl groups has a higher crosslinking density, thereby improving washing resistance.

In addition, the inks of the Reference Examples, which had viscosities of 60 mPa s or less, could be used as inkjet inks without issues.

**Claims**

1. An infrared-absorbing ultraviolet-curable ink, comprising a tungsten-based infrared-absorbing pigment, an ultraviolet-absorbing fluorescent pigment, an ultraviolet-curable urethane acrylate resin, and an ultraviolet-curable acrylic resin comprising no urethane bond.

2. The infrared-absorbing ultraviolet-curable ink according to claim 1, comprising 1 to 150 parts by mass of the ultraviolet-curable urethane acrylate resin relative to 100 parts by mass of the ultraviolet-curable acrylic resin.

3. The infrared-absorbing ultraviolet-curable ink according to claim 1 or 2, comprising 20 parts by mass or less of the tungsten-based infrared-absorbing pigment relative to 100 parts by mass in total solids of the infrared-absorbing ultraviolet-curable ink.

4. The infrared-absorbing ultraviolet-curable ink according to any one of claims 1 to 3, comprising 20 parts by mass or less of the ultraviolet-absorbing fluorescent pigment relative to 100 parts by mass in total solids of the infrared-absorbing ultraviolet-curable ink.

5. The infrared-absorbing ultraviolet-curable ink according to any one of claims 1 to 4, comprising 1 to 50 parts by mass of the ultraviolet-absorbing urethane acrylate resin relative to 100 parts by mass in total solids of the infrared-absorbing ultraviolet-curable ink.

6. The infrared-absorbing ultraviolet-curable ink according to any one of claims 1 to 5, wherein the ultraviolet-curable urethane acrylate resin comprises a plurality of acryloyl groups.

7. The infrared-absorbing ultraviolet-curable ink according to any one of claims 1 to 6, wherein the tungsten-based infrared-absorbing pigment is at least one selected from

   composite tungsten oxides represented by general formula (1): $M_xW_yO_z$, wherein
   M is one or more elements selected from the group consisting of H, He, alkali metals, alkaline earth metals, rare earth metals, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; $0 < x/y \leq 1$; and $2.2 \leq z/y \leq 3.0$, and
   tungsten oxides having a Magnéli phase represented by general formula (2): $W_yO_z$, wherein
   W is tungsten; O is oxygen; y and z are each a positive number; and $2.45 \leq z/y \leq 2.999$.

8. The infrared-absorbing ultraviolet-curable ink according to any one of claims 1 to 7, which is an inkjet ink.

9. An infrared-absorbing printed object, comprising a printed portion printed with the infrared-absorbing ultraviolet-curable ink according to any one of claims 1 to 8.

## INTERNATIONAL SEARCH REPORT

International application No.

**PCT/JP2022/002038**

### A. CLASSIFICATION OF SUBJECT MATTER

***B41J 2/01***(2006.01)i; ***C09D 11/101***(2014.01)i; ***C09D 11/322***(2014.01)i; ***B41M 5/00***(2006.01)i
FI: C09D11/322; B41M5/00 120; B41J2/01 501; C09D11/101

According to International Patent Classification (IPC) or to both national classification and IPC

### B. FIELDS SEARCHED

Minimum documentation searched (classification system followed by classification symbols)

B41J2/01; C09D11/101; C09D11/322; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | CN 107474634 A (BEIJING SATURN LOGO SYSTEM CO., LTD.) 15 December 2017 (2017-12-15) claims, paragraphs [0012], [0014], [0033]-[0063], etc. | 1-9 |
| Y | WO 2015/068282 A1 (KYODO PRINTING CO., LTD.) 14 May 2015 (2015-05-14) claims, paragraphs [0098]-[0100], [0123]-[0131], [0286]-[0300], etc. | 1-9 |
| Y | WO 2020/066388 A1 (FUJIFILM CORP.) 02 April 2020 (2020-04-02) claims, paragraphs [0026], [0052], [0124]-[0162], examples 18-20, table 4, etc. | 1-9 |
| Y | WO 2020/061629 A1 (CCL SECURE PTY LTD.) 02 April 2020 (2020-04-02) claims, paragraphs [0001], [0111]-[0119], tables 7, 8, etc. | 1-9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 March 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/002038**

| Patent document cited in search report | | | Publication date (day/month/year) | Patent family member(s) | | | Publication date (day/month/year) |
|---|---|---|---|---|---|---|---|
| CN | 107474634 | A | 15 December 2017 | (Family: none) | | | |
| WO | 2015/068282 | A1 | 14 May 2015 | (Family: none) | | | |
| WO | 2020/066388 | A1 | 02 April 2020 | CN | 112739545 | A | |
| WO | 2020/061629 | A1 | 02 April 2020 | FR | 3086203 | A1 | |

Form PCT/ISA/210 (patent family annex) (January 2015)

**EP 4 286 164 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121801 A
- WO 2017104855 A
- JP 2020050690 A
- JP 2005187323 A